# EUROPEAN PATENT APPLICATION

(11) **EP 4 472 328 A1**
(43) Date of publication of application: **04.12.2024**
(21) Application number: 22922805.1
(22) Date of filing: 28.01.2022
(51) Int. Cl.: H04W 76/00

(54) **NETWORK INTEGRATION METHOD AND APPARATUS OF NODE**

(71) Applicant: FUJITSU LIMITED, Kawasaki-shi, Kanagawa 211-8588 (JP)
(72) Inventor: YI, Su, Beijing 100022 (CN); ZHANG, Lei, Beijing 100022 (CN); JIA, Meiyi, Beijing 100022 (CN)
(74) Representative: Haseltine Lake Kempner LLP
(86) International application number: PCT/CN2022/074680
(87) International publication number: WO 2023/141965

(57) **Abstract**

Embodiments of the present disclosure provide a network integration method and apparatus for a node, the method including: a first unit of a first node accesses to a network, reports capability information to a network device, and registers and authorizes to a core network via the network device; a second unit of the first node is started, wherein the first unit is configured to set the second unit, and the second unit is configured to forward a signal between the network device and a terminal equipment.

## Description

### FIELD

The present disclosure relates to the field of communications.

### BACKGROUND

Coverage problem is a fundamental problem in cellular network deployment. Mobile operators use different types of nodes in their deployments to provide complete coverage. A common full protocol stack cell deployment is certainly best, but it is not always feasible (e.g. no backhaul link) or economically feasible. Therefore, mobile operators consider using new types of nodes to increase the flexibility of network deployment. For example, 3GPP R16 and R17 introduce a new type of node that does not require wired backhaul, i.e., integrated access and backhaul (IAB). Another type of node is an RF repeater. The RF repeater is usually non-generative, and simply amplifies and forwards (AF) all received signals. The RF repeater has been widely deployed in 2G, 3G, and 4G to complement the coverage provided by a common full protocol stack cell.

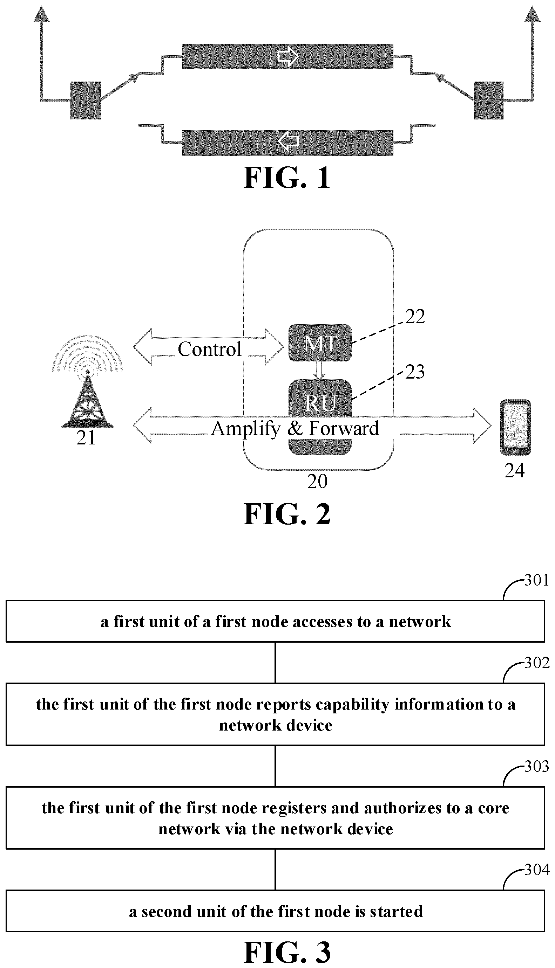

3GPP R17 introduces RF repeaters for New Radio (NR) to increase the coverage area of NR's cellular network deployment. FIG. 1 is a schematic diagram of a simple RF repeater. The RF repeater is usually full-duplex and cannot distinguish uplink and downlink transmissions. Its advantages include low cost, simple deployment, and no increase in latency. Its disadvantage is that it is possible to amplify noise together, thus increasing the interference on a signal.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### SUMMARY

The inventor finds that NR's RF repeaters regulate the demands on RF and electromagnetic compatibility (EMC), and also need to take into account frequency bands of FR1 (FDD (frequency division duplex) and TDD (Time division duplex)) and FR2 (TDD). The RF repeater does not need to perform adaptive beamforming on a UE. It does not take into account various factors that can improve performance, either. FR1 (Frequency range 1) and FR2 (frequency range 2) are frequency band ranges of 5G NR, corresponding to a low frequency band range and a high frequency band range respectively.

In order to optimize system performance, including possibly reducing interference and further improving coverage, a Network-Controlled Repeater (NC repeater, NCR, which may also called a smart repeater) that has a capacity of receiving and processing side control information from a network is proposed and is considered to be an effective scheme for improving network topology. It is regarded as an enhancement of a traditional RF repeater. However, network integration of the Network-Controlled Repeater and how to dynamically control it, etc. are not standardized.

For at least one of the above problems, embodiments of the present disclosure provide a network integration method and apparatus for a node.

According to an aspect of the embodiments of the present disclosure, a network integration apparatus for a node is provided, configured in a first node, the apparatus includes:
a first unit configured to set a second unit of the first node and access to a network, report capability information to a network device, and register and authorize to a core network via the network device; and
the second unit configured to forward a signal between the network device and a terminal equipment, and be started according to the setting of the first unit.

According to another aspect of the embodiments of the present disclosure, a communication control apparatus for a node is provided, configured in a first node, the apparatus includes:
a first unit configured to receive control information from a network device, and manage and configure a second unit of the first node according to the control information; and
the second unit configured to forward an analog uplink signal from a terminal equipment to the network device, or forward an analog downlink signal from the network device to the terminal equipment.

According to a further aspect of the embodiments of the present disclosure, a network integration apparatus for a node is provided, configured in a network device, the apparatus includes:
an access unit configured to enable a first unit of a first node to access to a network according to an access request of the first unit of the first node;
a receiving unit configured to receive capability information reported by the first unit of the first node, the capability information indicating that the first node includes a second unit; and
a processing unit configured to register and authorize the first node to a core network;
wherein the first unit is configured to set the second unit, the second unit is configured to forward a signal between the network device and the terminal equipment, and the second unit is started after the first unit accesses to the network, reports capability information to the network device and registers and authorizes to the core network via the network device.

According to another aspect of the embodiments of the present disclosure, a communication control apparatus is provided, configured in a network device, the apparatus includes:
a transmitting unit configured to transmit control information to a first unit of a first node, the first unit of the first node manages and configures a second unit of the first node according to the control information, and the second unit is configured to forward an analog uplink signal from a terminal equipment to the network device, or forward an analog downlink signal from the network device to the terminal equipment.

One of the advantageous effects of the embodiments of the present disclosure lies in: according to the embodiments of the present disclosure, in a network where a first node is deployed, network integration can be carried out effectively, and a second unit of the first node can be managed and controlled dynamically, so as to achieve network coverage enhancement and better serve users.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can also obtain other drawings based on these drawings under the premise that they do not pay inventive labor. In the drawings:
FIG. 1 is a schematic diagram of an RF repeater;
FIG. 2 is a structural schematic diagram of an example of a Network-Controlled Repeater;
FIG. 3 is a schematic diagram of a network integration method in the embodiments of the present disclosure;
FIG. 4 is a schematic diagram of an example of an OAM data protocol stack;
FIG. 5 is a schematic diagram of another example of an OAM data protocol stack;
FIG. 6 is a schematic diagram of a further example of an OAM data protocol stack;
FIG. 7 is another schematic diagram of a network integration method for a node in the embodiments of the present disclosure;
FIG. 8 is a schematic diagram of a communication control method in the embodiments of the present disclosure;
FIG. 9 is a schematic diagram of a user plane protocol stack of a Network-Controlled Repeater;
FIG. 10 is a schematic diagram of an example of a control plane protocol stack of a Network-Controlled Repeater;
FIG. 11 is a schematic diagram of another example of a control plane protocol stack of a Network-Controlled Repeater;
FIG. 12 is another schematic diagram of a communication control method for a node in the embodiments of the present disclosure;
FIG. 13 is a schematic diagram of a network integration apparatus for a node in the embodiments of the present disclosure;
FIG. 14 is another schematic diagram of a network integration apparatus for a node in the embodiments of the present disclosure;
FIG. 15 is a schematic diagram of a communication control apparatus in the embodiments of the present disclosure;
FIG. 16 is another schematic diagram of a communication control apparatus in the embodiments of the present disclosure;
FIG. 17 is a schematic diagram of a node in the embodiments of the present disclosure;
FIG. 18 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to...... ", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE-Advanced (LTE-A), Wideband Code Division Multiple Access (WCDMA), HighSpeed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "a cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

FIG. 2 is a structural schematic diagram of an example of a Network-Controlled Repeater. As shown in FIG. 2, the Network-Controlled Repeater 20 may be divided into two parts, one part is used to realize some functions of a UE and communicate with the gNB 21, this part may be called a mobile termination (MT) 22, but the present disclosure is not limited to this, it may also be named in other ways. The other part realizes a radio frequency function, that is, an amplification and forwarding function of the repeater, this part may be called a radio unit (RU) 23, but the present disclosure is not limited to this, similar to MT, it may also be named in other ways.

As shown in FIG. 2, the link between the gNB 21 and the MT 22 is a control link or control path, and also a fronthaul link. Through this control link, the gNB 21 may configure the Network-Controlled Repeater 20 via side control information such as TDD configuration, switching information, RU beamforming information, etc. The control link may be based on an existing Uu interface. The MT 22 applies these configuration information to the RU (that is, an AF module) 23 through internal operations of the Network-Controlled Repeater 20. Side control means that a network device (gNB 21) is intended to control the RU 23, but there is no direct interface between the network device (gNB 21) and the RU 23, so the network device (gNB 21) realizes control of the RU 23 through a control interface with the MT 22.

As shown in FIG. 2, an access link from the gNB 21 to the ordinary UE 24 undergoes signal amplification and forwarding by the Network-Controlled Repeater 20, so it is called an AF link, or may also be called a data path. The Network-Controlled Repeater 20 is transparent to the UE 24, the UE 24 may not be aware of the existence of the Network-Controlled Repeater 20. The data path (e.g. using an FR2 frequency band) carries an analog uplink/downlink signal from or to the UE 24. The data path is essentially an analog signal pass through. The data path is completely controlled by the gNB 21 (or a distributed unit (DU)) through the control path.

The inventor finds that the main advantages of the Network-Controlled Repeater lie in: a simpler protocol stack and network integration than traditional relay, integrated access and backhaul-distributed unit (IAB-DU) and gNB; more efficient AF operations achieved through side control of the gNB, such as dynamically changing TX/RX (transmission and reception states) of the repeater so as to reduce unnecessary noise amplification, as well as achieve transmission and reception with better spatial directivity.

In addition, for the Network-Controlled Repeater, possible technical directions are: side control information design content includes basic designs such as beamforming information configuration, timing, TDD configuration; designs of other aspects, including transceiver switching (on-off), bandwidth information, power control, same frequency-related issues or radio frequency demands, etc.; research and confirmation of signaling and configuration used to carry side control information; in addition to the side control information, management of the Network-Controlled Repeater also needs to be standardized, including e.g. authentication/authorization and interference management, etc.

However, as described above, network integration of the Network-Controlled Repeater and how to dynamically control it, etc. are not standardized.

Various implementations of the present disclosure will be described below with reference to the drawings. These implementations are exemplary only and are not limitations to the present disclosure.

In the embodiments of the present disclosure, for convenience of description, a node deployed in a network to improve network coverage or improve user performance is called a first node, which may be the aforementioned Network-Controlled Repeater 20 or a smart repeater (SR), it may also be a reconfigurable intelligent surface (RIS), etc., the present disclosure has no restriction on its name. Moreover, for convenience of description, a unit that implements the above MT function in the first node is called a first unit, and a unit that implements the above RU function in the first node is called a second unit.

### Embodiments of a first aspect

Embodiments of the present disclosure provide a network integration method for a node, which is described from a first node side.

FIG. 3 is a schematic diagram of a network integration method for a node in the embodiments of the present disclosure, referring to FIG. 3, the method includes:
301: a first unit of a first node accesses to a network;
302: the first unit of the first node reports capability information to a network device;
303: the first unit of the first node registers and authorizes to a core network via the network device;
304: a second unit of the first node is started.

It should be noted that the above FIG. 3 only schematically describes the embodiments of the present disclosure, but the present disclosure is not limited to this. For example, an execution order of the operations can be adjusted appropriately, moreover other some operations can be increased or reduced. Persons skilled in the art can make appropriate modifications according to the above contents, not limited to the records in the above FIG. 3.

In the embodiments of the present disclosure, as described above, the first node includes a first unit and a second unit, the first unit is a unit used to set the second unit in the first node, and the second unit is a unit used to forward a signal between a network device and a terminal equipment in the first node. Through the above network integration process, network integration can be carried out effectively, and a second unit of the first node can be managed and controlled dynamically, so as to achieve network coverage enhancement and better serve users.

In the embodiments of the present disclosure, the first unit and the second unit may be two unit collocated in the first node, as shown in FIG. 2. However, the present disclosure is not limited to this, for example, the second unit may further be a separate entity in the first node. For example, in an entire network, the first node, as a special UE, performs access and radio resource control (RRC) connection management according to traditional UE behaviors, while the second unit does not act as a part of collocation, but as an entity inside the UE, and is used to amplify and forward a frequency signal.

In some embodiments, that the first unit accesses to a network includes: the first unit selects a network device supporting the first node for access based on air-interface indication information of candidate network devices.

In the above embodiments, the first unit is connected to the network as an ordinary UE, this process may reuse an initial access procedure of the ordinary UE. Different from the ordinary UE, the first unit may select a network device supporting the first node for access based on air-interface indication information of candidate network devices. The air-interface indication information may be a new piece of information added in SIB1, such as called NCR-support, used to indicate whether a network device supports a type of a first node, however the present disclosure is not limited to this.

In some embodiments, that the first unit reports capability information to a network device includes: the first unit transmits a first message to the network device, the first message including a capability of the first node and/or information for indicating a type of the first node (e.g. whether it is a special UE, whether it is an NCR, whether it includes the second unit, etc.).

In the above embodiments, the first message may be an RRC setup complete (RRCSetupComplete) message. For example, the RRC setup complete message may include an indication of a first node, such as called ncr-NodeIndication, a network device selects an access and mobility management function (AMF) that supports a type of the first node based on the indication. However, the present disclosure is not limited to this, the first message may further be other message.

In the embodiments of the present disclosure, the operation 303 is optional, if registration and authorization of a core network is required, the operation 303 may be performed, thereby the core network registers and authorizes the first node and informs the network device of a result.

In the embodiments of the present disclosure, in 304, after the second unit is started, the AF function of the repeater may be started, that is, a signal between the network device and the terminal equipment is amplified and forwarded.

In the embodiments of the present disclosure, in some implementations, the first unit of the first node may further establish an OAM connection with an operation, administration and maintenance (OAM) server.

In one example, the first unit may establish an OAM connection with the OAM server using a protocol data unit (PDU) session.

For example, the first unit may establish a data radio bearer (DRB) for transmitting OAM data, that is, the OAM data is transmitted as user plane data of the first unit. In this mode, a PDU session and a Uu interface data bearer need to be established for the first unit to transmit the OAM data. Between the first unit and the network device, a plurality of DRBs may be established to transmit different types of OAM data.

In this example, an OAM data protocol stack of the first node may include: a physical layer, a MAC layer, an RLC layer, a PDCP layer, a SDAP layer, and an OAM layer, wherein the OAM layer is above the SDAP layer.

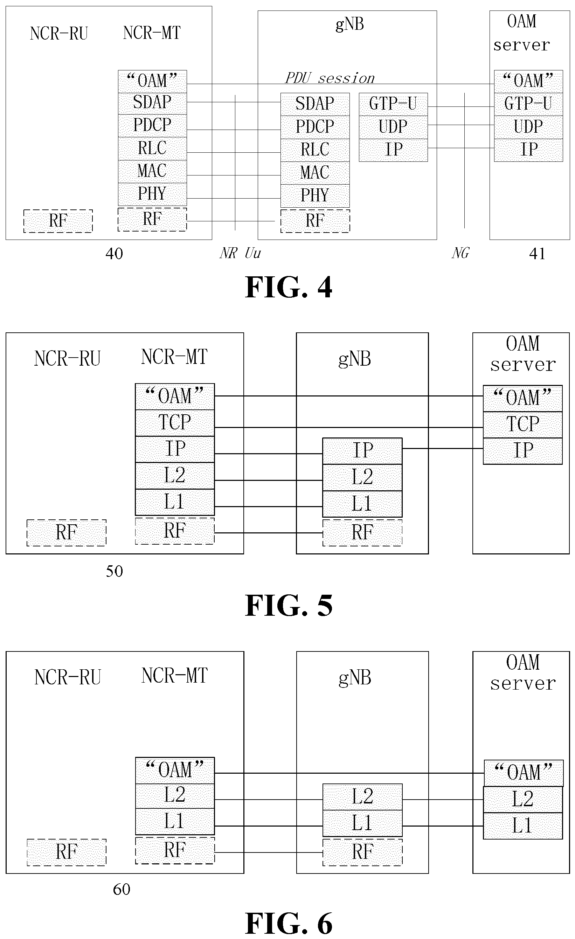

FIG. 4 is a schematic diagram of an example of an OAM data protocol stack, as shown in FIG. 4, a MT (i.e., the first unit) of the network-controlled repeater 40 (i.e., the first node) establishes an OAM connection with the OAM server 41 via a PDU session.

In another example, the first unit establishes an OAM connection with the OAM server via an IP layer.

For example, the first node generates an IP-based OAM data packet, which is IP routed by the network device to the OAM server via a traditional TCP/IP protocol stack. Downlink OAM data transmitted by the OAM server to the first node may be directly transmitted to the network device via IP routing, and the network device forwards such data to the first node after receiving such data. After receiving the downlink OAM data, the first node submits it to an upper layer for processing.

In this example, an OAM data protocol stack of the first node may include: an L1 layer, an L2 layer, an IP layer, a TCP layer and an OAM layer, wherein the OAM layer is above the TCP layer.

FIG. 5 is a schematic diagram of another example of an OAM data protocol stack, as shown in FIG. 5, an upper layer (the OAM module in FIG. 5) of a MT (i.e., the first unit) of the network-controlled repeater 50 (i.e., the first node) performs OAM configuration for MT and/or RU (i.e., the second unit) based on the OAM data.

In a further example, the first unit establishes an OAM connection with the OAM server via a layer 2.

For example, the first node generates OAM data, which is encapsulated in a protocol data unit of the layer 2 and is forwarded by the network device to the OAM server via a layer 2 protocol. Downlink OAM data transmitted by the OAM server to the first node is similarly transmitted to the network device via a layer 2 protocol, and the network device forwards such data to the first node after receiving such data. After receiving the downlink OAM data, the first node submits it to the OAM module for processing.

In this example, an OAM data protocol stack of the first node may include: an L1 layer, an L2 layer, and an OAM layer, wherein the OAM layer is above the L2 layer. In this example, protocol types of layer 1 and layer 2 are not restricted.

FIG. 6 is a schematic diagram of a further example of an OAM data protocol stack, as shown in FIG. 6, there are no restrictions on specific layer 2 and layer 1 protocols. An OAM module of a MT (i.e., the first unit) of the network-controlled repeater 60 (i.e., the first node) performs OAM configuration for MT and/or RU (i.e., the second unit) based on the OAM data.

In FIG. 4 to FIG. 6, "OAM" refers to a functional module that completes OAM configuration, it does not have to be a protocol layer, may be an application program or may also be a simple command interface.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, in a network where a first node is deployed, network integration can be carried out effectively, and a second unit of the first node can be managed and controlled dynamically, so as to achieve network coverage enhancement and better serve users.

### Embodiments of a second aspect

Embodiments of the present disclosure provide a network integration method for a node, which is described from a network device side. The contents same as the embodiments of the first aspect are not repeated again.

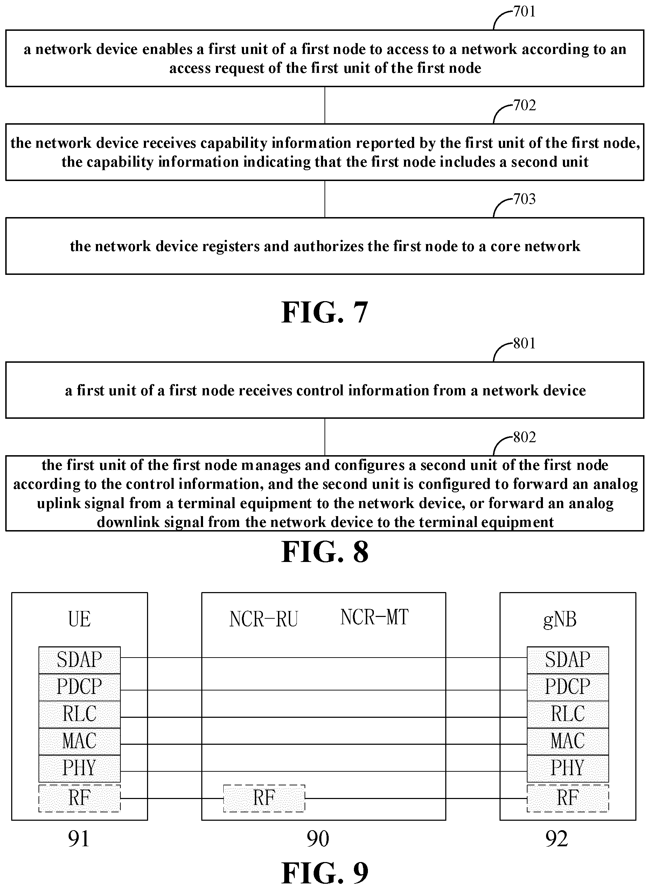

FIG. 7 is another schematic diagram of a network integration method for a node in the embodiments of the present disclosure, as shown in FIG. 7, the method includes:
701: a network device enables a first unit of a first node to access to a network according to an access request of the first unit of the first node;
702: the network device receives capability information reported by the first unit of the first node, the capability information indicating that the first node includes a second unit; and
703: the network device registers and authorizes the first node to a core network.
wherein the first unit is configured to set the second unit, the second unit is configured to forward a signal between the network device and the terminal equipment, and the second unit is started after the first unit accesses to the network, reports capability information to the network device and registers and authorizes to a core network via the network device.

It should be noted that the above FIG. 7 only schematically describes the embodiments of the present disclosure, but the present disclosure is not limited to this. For example, an execution order of operations can be adjusted appropriately, moreover other some operations can be increased or reduced. Persons skilled in the art can make appropriate modifications according to the above contents, not limited to the records in the above FIG. 7.

In some embodiments, the network device may further transmit air-interface indication information to the first unit of the first node, thereby the first unit of the first node selects a network device supporting the first node for access based on air-interface indication information of candidate network devices.

In some embodiments, the network device may further receive a first message reported by the first unit of the first node, the first message including the capability information, the capability information including a capability of the first node and/or information used to indicate a type of the first node.

In the above embodiments, the first message may be an RRC setup complete (RRCSetupComplete) message.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, in a network where a first node is deployed, network integration can be carried out effectively, and a second unit of the first node can be managed and controlled dynamically, so as to achieve network coverage enhancement and better serve users.

### Embodiments of a third aspect

Embodiments of the present disclosure provide a communication control method, which is described from a first node side.

FIG. 8 is a schematic diagram of a communication control method in the embodiments of the present disclosure, as shown in FIG. 8, the method includes:
801: a first unit of a first node receives control information from a network device;
802: the first unit of the first node manages and configures a second unit of the first node according to the control information, and the second unit is configured to forward an analog uplink signal from a terminal equipment to the network device, or forward an analog downlink signal from the network device to the terminal equipment.

In the embodiments of the present disclosure, as described above, the first node includes a first unit and a second unit, the first unit is a unit used to set the second unit in the first node, and the second unit is a unit used to forward a signal between a network device and a terminal equipment in the first node. Through a control mode of the above control information, the second unit of the first node can be managed and controlled dynamically, so as to achieve network coverage enhancement and better serve users.

In the embodiments of the present disclosure, the first unit and the second unit may be two units collocated in the first node, as shown in FIG. 2. However, the present disclosure is not limited to this, for example, the second unit may further be a separate entity in the first node. For example, in an entire network, the first node, as a special UE, performs access and radio resource control (RRC) connection management according to traditional UE behaviors, while the second unit does not act as a part of collocation, but as an entity inside the UE, and is used to amplify and forward a radio frequency signal.

In the embodiments of the present disclosure, a user plane of the first node only involves the second unit. FIG. 9 is a schematic diagram of a user plane protocol stack of a network-controlled repeater 90 (that is, the first node). As shown in FIG. 9, a radio frequency module RF of the RU part (that is, the second unit mentioned above) acts as an amplifier to forward an analog uplink signal from UE 91 to gNB 92, or to forward an analog downlink signal transmitted by gNB 92 to UE 91.

In the embodiments of the present disclosure, the second unit itself only has an RF function, has no upper layer protocol stack, and cannot directly have an interface with a network device, the network device may only indirectly control the second unit through the control on the first unit.

In some embodiments, the control information may be carried via dynamic signaling.

In one example, the dynamic signaling is layer 2 signaling.

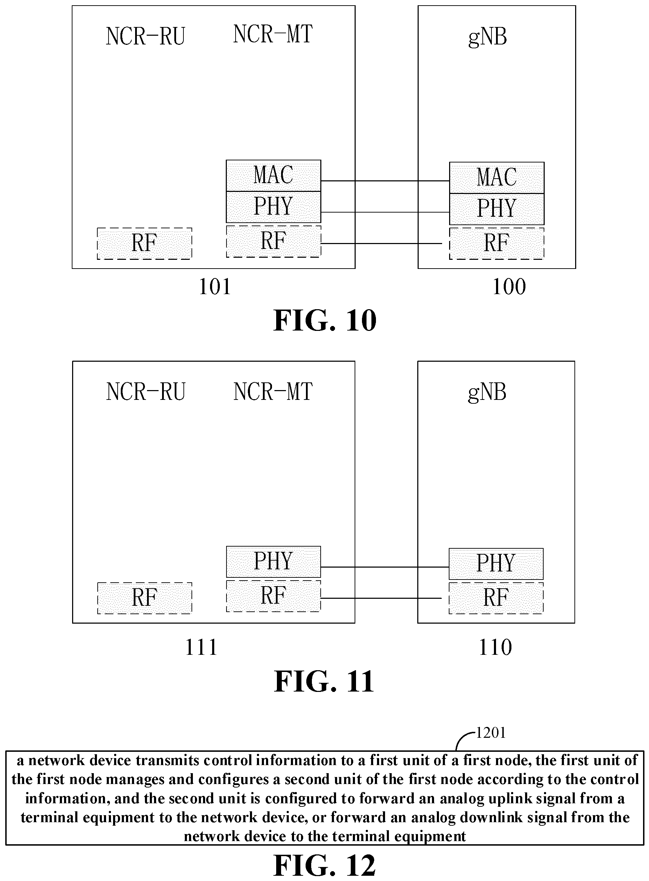

In this example, a control plane protocol stack of the first unit (that is, a control plane protocol stack between the first unit and a network device) may include a physical layer and a MAC layer. FIG. 10 is a schematic diagram of an example of a control plane protocol stack of a Network-Controlled Repeater (i.e., a first node).

As shown in FIG. 10, the control plane protocol stack exists between gNB 100 and NCR-MT (i.e., the first unit) of the network-controlled repeater 101. The control plane protocol stack manages and controls MT via layer protocols of a MAC layer/physical layer (PHY), for example a Uu interface of NR in related arts may be used. The MT then manages and configures the RU (that is, the second unit) internally according to the configuration or indication of gNB 100, so that the RU realizes the efficient amplification and forwarding work of the user plane, which realizes the relay function of network control.

In this example, further, the layer 2 signaling may use a MAC CE (control element) to carry the above control information to dynamically control the first node. The MAC CE may be a MAC PDU between MAC layers, and only carries control information.

In another example, the dynamic signaling is layer 1 signaling.

In this example, a control plane protocol stack of the first unit (that is, a control plane protocol stack between the first unit and a network device) includes a physical layer. FIG. 11 is a schematic diagram of another example of a control plane protocol stack of a Network-Controlled Repeater (i.e., a first node).

As shown in FIG. 11, the control plane protocol stack exists between gNB 110 and NCR-MT (i.e., the first unit) of the network-controlled repeater 111. The control plane protocol stack manages and controls MT via a physical layer protocol, for example a Uu interface of NR in related arts may be used. The MT then manages and configures the RU (that is, the second unit) internally according to the configuration or indication of gNB 110, so that the RU realizes the efficient amplification and forwarding work of the user plane, which realizes the relay function of network control.

In this example, further, the layer 1 signaling may use downlink control information (DCI) to carry the above control information to dynamically control the first node. The DCI is downlink control information transmitted by a network device to a first node (the first unit in this embodiment), carried by a physical downlink control channel (PDCCH).

In the embodiments of the present disclosure, in some embodiments, the dynamic signaling includes a parameter dynamically configured for the second unit. The parameter, for example, includes at least one of the following:
an on-off mode;
timing information for aligning transmission/reception boundaries;
beamforming information;
dynamic uplink-downlink TDD configuration;
power and/or gain control information;
bandwidth information;
reference signal configuration for the second unit; and
reference signal transmit power for the second unit.

The on-off mode is used for efficient interference management and energy saving, for example, including a period of the on-off mode, an on duration in the period, and an on-off command, etc. The beamforming information, for example, includes beam information of the link between a TRP and a NCR and/or beam information of the link between a NCR and a UE, etc. The power and/or gain control information is used for efficient interference management, for example may be gain control information per carrier frequency or per bandwidth part (BWP), etc. The bandwidth information, for example, may be a bandwidth and center frequency, etc. of a pass band/carrier frequency/BWP.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, in a network where a first node is deployed, a second unit of the first node can be managed and controlled dynamically, so as to achieve network coverage enhancement and better serve users.

### Embodiments of a fourth aspect

The embodiments of the present disclosure provide a communication control method, which is described from a network device side. The contents same as the embodiments of the third aspect are not repeated again.

FIG. 12 is another schematic diagram of a communication control method for a node in the embodiments of the present disclosure, as shown in FIG. 12, the method includes:
1201: a network device transmits control information to a first unit of a first node, the first unit of the first node manages and configures a second unit of the first node according to the control information, and the second unit is configured to forward an analog uplink signal from a terminal equipment to the network device, or forward an analog downlink signal from the network device to the terminal equipment.

In some embodiments, the control information is carried via dynamic signaling.

For example, the dynamic signaling is layer 2 signaling. The layer 2 signaling may use a MAC CE to carry the above control information.

For another example, the dynamic signaling is layer 1 signaling. The layer 1 signaling may use DCI to carry the above control information.

In some embodiments, the dynamic signaling includes a parameter dynamically configured for the second unit. The parameter may include at least one of the following:
an on-off mode;
timing information for aligning transmission/reception boundaries;
beamforming information;
dynamic uplink and downlink TDD configuration;
power and/or gain control information;
bandwidth information;
reference signal configuration for the second unit; and
reference signal transmit power for the second unit.

Each of the above embodiments is only illustrative for the embodiments of the present disclosure, but the present disclosure is not limited to this, appropriate modifications can be also made based on the above each embodiment. For example, each of the above embodiments may be used individually, or one or more of the above embodiments may be combined.

According to the method in the embodiments of the present disclosure, in a network where a first node is deployed, a second unit of the first node can be managed and controlled dynamically, so as to achieve network coverage enhancement and better serve users.

### Embodiments of a fifth aspect

The embodiments of the present disclosure provide a network integration apparatus for a node, the apparatus may, for example, be a first node deployed in a network, or may be one or more parts or components configured in the first node. The first node may be a network-controlled repeater, or may be a smart repeater or a reconfigurable intelligent surface. The principle of the apparatus to solve the problem is same as the method in the embodiments of the first aspect, thus its specific implementation can refer to the implementation of the method in the embodiments of the first aspect, the same contents will not be repeated.

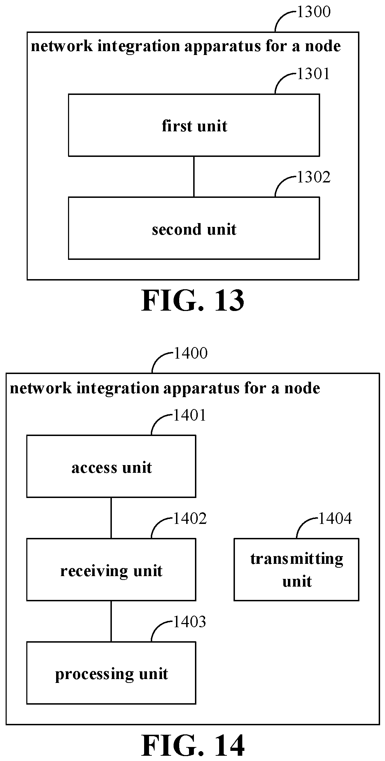

FIG. 13 is a schematic diagram of a network integration apparatus for a node in the embodiments of the present disclosure, as shown in FIG. 13, the apparatus 1300 includes a first unit 1301 and a second unit 1302. The first unit 1301 is used to set the second unit 1302, and the second unit 1302 is used to forward a signal between a network device and a terminal equipment.

In the embodiments of the present disclosure, the first unit 1301 further accesses to a network; reports capability information to a network device; registers and authorizes to a core network via the network device (optionally, if needed); the second unit 1302 is started, thereby network integration of the first node is completed.

In some embodiments, the first unit 1301 selects a network device supporting a type of the first node for access based on air-interface indication information of candidate network devices.

In some embodiments, the first unit 1301 transmits a first message to the network device, the first message including a capability of the first node and/or information indicating a type of the first node. The first message for example is an RRC setup complete (RRCSetupComplete) message.

In some embodiments, the first unit 1301 may further establish OAM connection with an OAM server.

For example, the first unit 1301 establishes OAM connection with an OAM server using a PDU session.

In this example, an OAM data protocol stack of the first node includes: a physical layer, a MAC layer, an RLC layer, a PDCP layer, a SDAP layer, and an OAM layer, the OAM layer is above the SDAP layer.

For another example, the first unit 1301 establishes OAM connection with the OAM server via an IP layer.

In this example, an OAM data protocol stack of the first node includes: an L1 layer, an L2 layer, an IP layer, a TCP layer and an OAM layer, the OAM layer is above the TCP layer.

For another example, the first unit 1301 establishes OAM connection with the OAM server via a layer 2.

In this example, an OAM data protocol stack of the first node includes: an L1 layer, an L2 layer, and an OAM layer, the OAM layer is above the L2 layer.

The embodiments of the present disclosure further provide a network integration apparatus for a node, the apparatus for example may be a network device, or may also be one or more parts or components configured in the network device. The principle of the apparatus to solve the problem is same as the method in the embodiments of the second aspect, thus its specific implementation can refer to the implementation of the method in the embodiments of the second aspect, the same contents will not be repeated.

FIG. 14 is another schematic diagram of a network integration apparatus for a node in the embodiments of the present disclosure, as shown in FIG. 14, the apparatus 1400 includes: an access unit 1401, a receiving unit 1402 and a processing unit 1403.

The access unit 1401 enables a first unit of the first node to access to a network according to an access request of the first unit of the first node; the receiving unit 1402 receives capability information reported by the first unit of the first node, the capability information indicating that the first node includes a second unit; and the processing unit 1403 registers and authorizes the first node to a core network. The first unit of the first node is configured to set a second unit of the first node, the second unit is configured to forward a signal between the network device and the terminal equipment, and the second unit is started after the first unit accesses to the network, reports capability information to the network device and registers and authorizes to a core network via the network device.

In some embodiments, as shown in FIG. 14, the apparatus 1400 further includes:
a transmitting unit 1404 configured to transmit air-interface indication information to the first unit of the first node; the first unit of the first node selects a network device supporting a type of the first node for access based on air-interface indication information of candidate network devices.

In some embodiments, the receiving unit 1402 receives a first message reported by the first unit of the first node, the first message including the capability information, the capability information including a capability of the first node and/or information used to indicate a type of the first node. The first message for example is an RRC setup complete (RRCSetupComplete) message.

It's worth noting that the above only describes components or modules related to the present disclosure, but the present disclosure is not limited to this. The apparatuses 1300, 1400 in the embodiments of the present disclosure may further include other components or modules. For detailed contents of these components or modules, relevant technologies can be referred to.

Moreover, for the sake of simplicity, FIG. 13 and FIG. 14 only exemplarily show a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

According to the apparatus in the embodiments of the present disclosure, in a network where a first node is deployed, network integration can be carried out effectively, and a second unit of the first node can be managed and controlled dynamically, so as to achieve network coverage enhancement and better serve users.

### Embodiments of a sixth aspect

The embodiments of the present disclosure provide a communication control apparatus, the apparatus may, for example, be a first node deployed in a network, or may be one or more parts or components configured in the first node. The first node may be a network-controlled repeater, or may be a smart repeater or a reconfigurable intelligent surface. The principle of the apparatus to solve the problem is same as the method in the embodiments of the third aspect, thus its specific implementation can refer to the implementation of the method in the embodiments of the third aspect, the same contents will not be repeated.

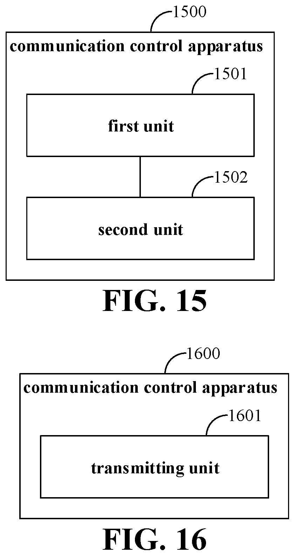

FIG. 15 is a schematic diagram of a communication control apparatus in the embodiments of the present disclosure, as shown in FIG. 15, the apparatus 1500 includes a first unit 1501 and a second unit 1502. The first unit 1501 is configured to receive control information from a network device, manage and configure a second unit of the first node according to the control information; and the second unit 1502 is configured to forward an analog uplink signal from a terminal equipment to the network device, or forward an analog downlink signal from the network device to the terminal equipment.

In some embodiments, the control information is carried via dynamic signaling.

For example, the dynamic signaling is layer 2 signaling. The layer 2 signaling may use a MAC CE to carry the above control information.

In this example, a control plane protocol stack of the first unit 1501 may include a physical layer and a MAC layer, as shown in FIG. 10.

For another example, the dynamic signaling is layer 1 signaling. The layer 1 signaling may use DCI to carry the above control information.

In this example, a control plane protocol stack of the first unit 1501 may include a physical layer, as shown in FIG. 11.

In some embodiments, the dynamic signaling includes a parameter dynamically configured for the second unit 1502. The parameter e.g. may include at least one of the following:
an on-off mode;
timing information for aligning transmission/reception boundaries;
beamforming information;
dynamic uplink and downlink TDD configuration;
power and/or gain control information;
bandwidth information;
reference signal configuration for the second unit; and
reference signal transmit power for the second unit.

The embodiments of the present disclosure further provide a communication control apparatus, the apparatus may, for example, be a network device, or may also be one or more parts or components configured in the network device. The principle of the apparatus to solve the problem is same as the method in the embodiments of the fourth aspect, thus its specific implementation can refer to the implementation of the method in the embodiments of the fourth aspect, the same contents will not be repeated.

FIG. 16 is another schematic diagram of a communication control apparatus in the embodiments of the present disclosure, as shown in FIG. 16, the apparatus 1600 includes: a transmitting unit 1601 configured to transmit control information to a first unit of a first node, the first unit of the first node manages and configures a second unit of the first node according to the control information, and the second unit is configured to forward an analog uplink signal from a terminal equipment to the network device, or forward an analog downlink signal from the network device to the terminal equipment.

In some embodiments, the control information is carried via dynamic signaling.

In one example, the dynamic signaling is layer 2 signaling. The layer 2 signaling may use a MAC CE to carry the above control information.

In another example, the dynamic signaling is layer 1 signaling. The layer 1 signaling may use DCI to carry the above control information.

In some embodiments, the dynamic signaling includes a parameter dynamically configured for the second unit. The parameter, for example, includes at least one of the following:
an on-off mode;
timing information for aligning transmission/reception boundaries;
beamforming information;
dynamic uplink and downlink TDD configuration;
power and/or gain control information;
bandwidth information;
reference signal configuration for the second unit; and
reference signal transmit power for the second unit.

It's worth noting that the above only describes components or modules related to the present disclosure, but the present disclosure is not limited to this. The apparatuses 1500, 1600 in the embodiments of the present disclosure may further include other components or modules. For detailed contents of these components or modules, relevant technologies can be referred to.

Moreover, for the sake of simplicity, FIG. 15 and FIG. 16 only exemplarily show a connection relationship or signal direction between components or modules, however persons skilled in the art should know that various relevant technologies such as bus connection can be used. The above components or modules can be realized by a hardware facility such as a processor, a memory, a transmitter, a receiver, etc. The embodiments of the present disclosure have no limitation to this.

According to the apparatus in the embodiments of the present disclosure, in a network where a first node is deployed, a second unit of the first node can be managed and controlled dynamically, so as to achieve network coverage enhancement and better serve users.

### Embodiments of a seventh aspect

The embodiments of the present disclosure provide a communication system, including a terminal equipment, a network device and a node, the node is configured to perform the method described in the embodiments of the first or third aspect, and/or the network device is configured to perform the method described in the embodiments of the second or fourth aspect. Behaviors of the node and the network device have been described in detail in the embodiments of the first to fourth aspects, whose contents are incorporated here and will not be repeated here. The present disclosure does not restrict behaviors of the terminal equipment.

The embodiments of the present disclosure further provide a node including the network integration apparatus 1300 for a node described in the embodiments of the fifth aspect, or including the communication control apparatus 1500 described in the embodiments of the sixth aspect. The node may be a network-controlled repeater (NCR), or a smart repeater (SR) or a reconfigurable intelligent surface (RIS).

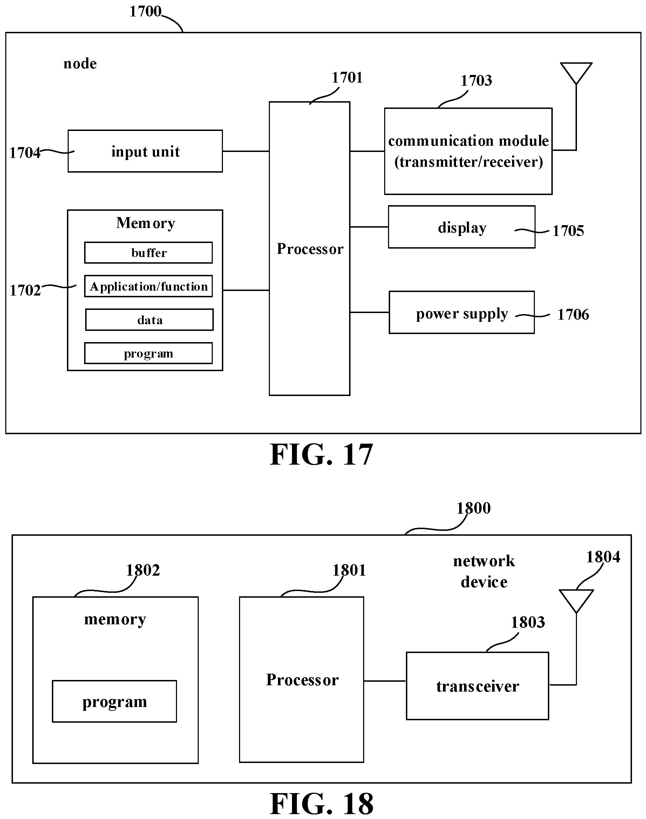

FIG. 17 is a schematic diagram of a node in the embodiments of the present disclosure. As shown in FIG. 17, the node 1700 may include a processor 1701 and a memory 1702; the memory 1702 stores data and programs, and is coupled to the processor 1701. It's worth noting that this figure is exemplary; other types of structures can also be used to supplement or replace this structure, so as to realize a telecommunication function or other functions.

For example, the processor 1701 may be configured to execute a program to implement the method described in the embodiments of the first aspect or the third aspect.

As shown in FIG. 17, the node 1700 may further include: a communication module 1703, an input unit 1704, a display 1705 and a power supply 1706. The functions of said components are similar to related arts, which are not repeated here. It's worth noting that the node 1700 does not have to include all the components shown in FIG. 17, said components are not indispensable. Moreover, the node 1700 may also include components not shown in FIG. 17, related arts can be referred to.

The embodiments of the present disclosure further provide a network device including the network integration apparatus 1400 for a node described in the embodiments of the fifth aspect, or including the communication control apparatus 1600 described in the embodiments of the sixth aspect.

FIG. 18 is a schematic diagram of a network device in the embodiments of the present disclosure. As shown in FIG. 18, the network device 1800 may include: a central processing unit (CPU)1801 and a memory 1802; the memory 1802 is coupled to the central processing unit 1801. The memory 1802 may store various data; moreover, also stores a program for information processing, and executes the program under the control of the processor 1801, so as to receive various information transmitted by the terminal equipment and transmit various information to the terminal equipment.

For example, the processor 1801 can be configured to execute a program to implement the method described in the embodiments of the second aspect or the fourth aspect.

In addition, as shown in FIG. 18, the network device 1800 may further include: a transceiver 1803 and an antenna 1804, etc.; wherein the functions of said components are similar to relevant arts, which are not repeated here. It's worth noting that the network device 1800 does not have to include all the components shown in FIG. 18. Moreover, the network device 1800 may also include components not shown in FIG. 18, relevant arts can be referred to.

The embodiments of the present disclosure further provide a computer readable program, wherein when the program is executed in a node, the program enables a computer to execute the method as described in the embodiments of the first or third aspect, in the node.

The embodiments of the present disclosure further provide a storage medium in which a computer readable program is stored, wherein the computer readable program enables a computer to execute the method as described in the embodiments of the first or third aspect, in a node.

The embodiments of the present disclosure further provide a computer readable program, wherein when a network device executes the program, the program enables a computer to execute the method described in the embodiments of the second or fourth aspect, in the network device.

The embodiments of the present disclosure further provide a storage medium in which a computer readable program is stored, wherein the computer readable program enables a computer to execute the method as described in the embodiments of the second or fourth aspect, in a network device.

The apparatus and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The logic component is e.g. a field programmable logic component, a microprocessor, a processor used in a computer, etc. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

Regarding the above implementations disclosed in this embodiment, the following supplements are further disclosed:
1. A network integration method for a node, wherein the method includes:
   a first unit of a first node accesses to a network;
   the first unit of the first node reports capability information to a network device;
   the first unit of the first node registers and authorizes to a core network via the network device;
   a second unit of the first node is started, wherein the first unit is configured to set the second unit, the second unit is configured to forward a signal between the network device and the terminal equipment.
2. The method according to Supplement 1, wherein the first unit of the first node accesses to the network, including:
   the first unit selects a network device supporting a type of the first node for access based on air-interface indication information of candidate network devices.
3. The method according to Supplement 1, wherein the first unit of the first node reports capability information to the network device, including:
   the first unit transmits a first message to the network device, the first message including a capability of the first node and/or information indicating the type of the first node.
4. The method according to Supplement 3, wherein the first message is an RRC setup complete (RRCSetupComplete) message.
5. The method according to Supplement 1, wherein the method further includes:
   the first unit of the first node establishes OAM connection with an OAM server.
6. The method according to Supplement 5, wherein the first unit establishes OAM connection with the OAM server by using a PDU session.
7. The method according to Supplement 6, wherein an OAM data protocol stack of the first node includes: a physical layer, a MAC layer, an RLC layer, a PDCP layer, a SDAP layer, and an OAM layer, the OAM layer is above the SDAP layer.
8. The method according to Supplement 5, wherein the first unit establishes OAM connection with the OAM server via an IP layer.
9. The method according to Supplement 8, wherein an OAM data protocol stack of the first node includes: an L1 layer, an L2 layer, an IP layer, a TCP layer and an OAM layer, the OAM layer is above the TCP layer.
10. The method according to Supplement 5, wherein the first unit establishes OAM connection with the OAM server via a layer 2.
11. The method according to Supplement 10, wherein an OAM data protocol stack of the first node includes: an L1 layer, an L2 layer and an OAM layer, the OAM layer is above the L2 layer.
12. A communication control method, wherein the method includes:
   a first unit of a first node receives control information from a network device;
   the first unit of the first node manages and configures a second unit of the first node according to the control information, and the second unit is configured to forward an analog uplink signal from a terminal equipment to the network device, or forward an analog downlink signal from the network device to the terminal equipment.
13. The method according to Supplement 12, wherein the control information is carried by dynamic signaling.
14. The method according to Supplement 13, wherein the dynamic signaling is layer 2 signaling.
15. The method according to Supplement 14, wherein the layer 2 signaling carries the control information by using an MAC CE.
16. The method according to Supplement 14 or 15, wherein a control plane protocol stack of the first unit includes a physical layer and a MAC layer.
17. The method according to Supplement 13, wherein the dynamic signaling is layer 1 signaling.
18. The method according to Supplement 17, wherein the layer 1 signaling carries the control information by using DCI.
19. The method according to Supplement 17 or 18, wherein a control plane protocol stack of the first unit includes a physical layer.
20. The method according to Supplement 13, wherein the dynamic signaling includes a parameter dynamically configured for the second unit.
21. The method according to Supplement 20, wherein the parameter includes at least one of the following:
   an on-off mode;
   timing information for aligning transmission/reception boundaries;
   beamforming information;
   dynamic uplink-downlink TDD configuration;
   power and/or gain control information;
   bandwidth information;
   reference signal configuration for the second unit; and
   reference signal transmit power for the second unit.
22. The method according to any one of Supplements 1 to 21, wherein the first node is a network-controlled repeater (NCR) or a smart repeater (SR) or a reconfigurable intelligent surface (RIS).
23. A network integration method for a node, wherein the method includes:
   a network device enables a first unit of a first node to access to a network according to an access request of the first unit of the first node;
   the network device receives capability information reported by the first unit of the first node, the capability information indicating that the first node includes a second unit; and
   the network device registers and authorizes the first node to a core network;
   wherein the first unit is configured to set the second unit, the second unit is configured to forward a signal between the network device and the terminal equipment, and the second unit is started after the first unit accesses to the network, reports capability information to the network device and registers and authorizes to a core network via the network device.
24. The method according to Supplement 23, wherein the method further includes:
   the network device transmits air-interface indication information to the first unit of the first node;
   the first unit of the first node selects a network device supporting the first node for access based on air-interface indication information of candidate network devices.
25. The method according to Supplement 23, wherein the network device receives a first message reported by the first unit of the first node, the first message including the capability information, the capability information including a capability of the first node and/or information indicating a type of the first node.
26. The method according to Supplement 25, wherein the first message is an RRC setup complete (RRCSetupComplete) message.
27. A communication control method, wherein the method includes:
   a network device transmits control information to a first unit of a first node, the first unit of the first node manages and configures a second unit of the first node according to the control information, and the second unit is configured to forward an analog uplink signal from a terminal equipment to the network device, or forward an analog downlink signal from the network device to the terminal equipment.
28. The method according to Supplement 27, wherein the control information is carried by dynamic signaling.
29. The method according to Supplement 28, wherein the dynamic signaling is layer 2 signaling.
30. The method according to Supplement 29, wherein the layer 2 signaling carries the control information by using an MAC CE.
31. The method according to Supplement 28, wherein the dynamic signaling is layer 1 signaling.
32. The method according to Supplement 31, wherein the layer 1 signaling carries the control information by using DCI.
33. The method according to Supplement 28, wherein the dynamic signaling includes a parameter dynamically configured for the second unit.
34. The method according to Supplement 33, wherein the parameter includes at least one of the following:
   an on-off mode;
   timing information for aligning transmission/reception boundaries;
   beamforming information;
   dynamic uplink and downlink TDD configuration;
   power and/or gain control information;
   bandwidth information;
   reference signal configuration for the second unit; and
   reference signal transmit power for the second unit.
35. A node, including a memory and a processor, the memory storing a computer program, and the processor being configured to execute the computer program to carry out the method according to any one of the supplements 1 to 22.
36. A network device, including a memory and a processor, the memory storing a computer program, and the processor being configured to execute the computer program to carry out the method according to any one of Supplements 23 to 34.
37. A communication system, including a terminal equipment, a network device and a node, the network device is configured to execute the method according to any one of Supplements 23 to 34, and the node is configured to execute the method according to any one of Supplements 1 to 22.

## Claims

1. A network integration apparatus for a node, configured in a first node, wherein the apparatus comprises:
a first unit configured to set a second unit of the first node; and
the second unit configured to forward a signal between a network device and a terminal equipment;
wherein the first unit accesses to the network, reports capability information to the network device, and registers and authorizes to a core network via the network device, and the second unit is started.

2. The apparatus according to claim 1, wherein the first unit accesses to a network, including:
the first unit selects a network device supporting a type of the first node for access based on air-interface indication information of candidate network devices.

3. The apparatus according to claim 1, wherein the first unit reports capability information to the network device, including:
the first unit transmits a first message to the network device, the first message including a capability of the first node and/or information indicating the type of the first node.

4. The apparatus according to claim 3, wherein the first message is an RRC setup complete (RRCSetupComplete) message.

5. The apparatus according to claim 1, wherein
the first unit further establishes OAM connection with an OAM server.

6. The apparatus according to claim 5, wherein the first unit establishes OAM connection with the OAM server by using a PDU session.

7. The apparatus according to claim 5, wherein the first unit establishes OAM connection with the OAM server via an IP layer.

8. The apparatus according to claim 5, wherein the first unit establishes OAM connection with the OAM server via a layer 2.

9. The apparatus according to claim 1, wherein the first node is a network-controlled repeater (NCR) or a smart repeater (SR) or a reconfigurable intelligent surface (RIS).

10. A communication control apparatus, configured in a first node, wherein the apparatus comprises:
a first unit configured to receive control information from a network device, and manage and configure a second unit of the first node according to the control information; and
the second unit configured to forward an analog uplink signal from a terminal equipment to the network device, or forward an analog downlink signal from the network device to the terminal equipment.

11. The apparatus according to claim 10, wherein the control information is carried by dynamic signaling.

12. The apparatus according to claim 11, wherein the dynamic signaling is layer 2 signaling.

13. The apparatus according to claim 12, wherein the layer 2 signaling carries the control information by using an MAC CE.

14. The apparatus according to claim 11, wherein the dynamic signaling is layer 1 signaling.

15. The apparatus according to claim 14, wherein the layer 1 signaling carries the control information by using DCI.

16. The apparatus according to claim 11, wherein the dynamic signaling includes a parameter dynamically configured for the second unit.

17. The apparatus according to claim 16, wherein the parameter comprises at least one of the following:
an on-off mode;
timing information for aligning transmission/reception boundaries;
beamforming information;
dynamic uplink and downlink TDD configuration;
power and/or gain control information;
bandwidth information;
reference signal configuration for the second unit; and
reference signal transmit power for the second unit.

18. A network integration apparatus for a node, configured in a network device, wherein the apparatus comprises:
an access unit configured to enable a first unit of a first node to access to a network according to an access request of the first unit of the first node;
a receiving unit configured to receive capability information reported by the first unit of the first node, the capability information indicating that the first node comprises a second unit; and
a processing unit configured to register and authorize the first node to a core network;
wherein the first unit is configured to set the second unit, the second unit is configured to forward a signal between the network device and the terminal equipment, and the second unit is started after the first unit accesses to the network, reports capability information to the network device and registers and authorizes to a core network via the network device.

19. The apparatus according to claim 18, wherein the apparatus further comprises:
a transmitting unit configured to transmit air-interface indication information to the first unit of the first node;
the first unit of the first node selects a network device supporting the first node for access based on air-interface indication information of candidate network devices.

20. The apparatus according to claim 18, wherein the receiving unit receives a first message reported by the first unit of the first node, the first message comprising the capability information, the capability information including a capability of the first node and/or information indicating a type of the first node.
